# DEMANDE DE BREVET EUROPEEN

(11) **EP 4 413 860 A1**
(43) Date de publication de la demande: **14.08.2024**
(21) Numéro de dépôt: 24156719.7
(22) Date de dépôt: 09.02.2024
(51) Int. Cl.: A01N 43/16, A01P 21/00

(54) **COMPOSITION BIOSTIMULANTE POUR LES VEGETAUX A BASE DE CHITOSANES**

(30) Priorité: 09.02.2023 FR 2301222
(71) Demandeur: Amiroy, 70100 Arc-lès-Gray (FR)
(72) Inventeur: CHEATSAZAN, Hamed, 70100 Ancier (FR); RABANI, Vahideh, 70100 Ancier (FR)
(74) Mandataire: Hautier IP

(57) **Abrégé**

L'invention concerne une composition biostimulante pour les végétaux comprenant au moins deux chitosanes choisis parmi :
- Chitosane I - poids moléculaire ultra bas, viscosité inférieure ou égale à 5 mPa.s., DDA supérieur ou égal à 70%,
- Chitosane II - poids moléculaire très bas, viscosité comprise entre 6 et 10 mPa.s., DDA supérieur ou égal à 85%,
- Chitosane III - poids moléculaire bas, viscosité comprise entre 15 et 22 mPa.s., DDA supérieur ou égal à 85%,
- Chitosane IV - poids moléculaire moyen bas, viscosité comprise entre 30 et 45 mPa.s., DDA supérieur ou égal à 80%,
- Chitosane V - poids moléculaire moyen, viscosité comprise entre 65 et 100 mPa.s., DDA supérieur ou égal à 80%.

## Description

### DOMAINE TECHNIQUE

La présente invention appartient au domaine agricole et plus précisément au domaine des produits destinés aux végétaux. L'invention trouvera notamment son application pour stimuler la vitesse de germination, la vigueur, la croissance et/ou la résistance contre les maladies et les stress abiotiques des végétaux. L'invention s'applique à tous types de végétaux que ce soient des plantes, des arbustes, des arbres, cultivés ou naturels.

### ETAT DE LA TECHNIQUE

La chitine est un polymère naturel largement distribué dans le règne vivant. La chitine peut être définie comme substance organique de structure semblable à celle de la cellulose (polysaccharide), constituant de la cuticule des insectes et des crustacés, et de la paroi cellulaire de certains champignons. Sa production annuelle est estimée à plusieurs milliards de tonnes. La chitine est un polymère de haut poids moléculaire, non toxique et biodégradable. C'est, après la cellulose, le polysaccharide le plus répandu dans la nature. Le chitosane est obtenu après une modification chimique de la chitine. La chitine et le chitosane sont des polysaccharides appartenant à la famille des glycosaminoglycanes (GAG).

La chitine est constituée d'une chaîne linéaire de groupes acétylglucosamine est peut-être représentée par la formule I.

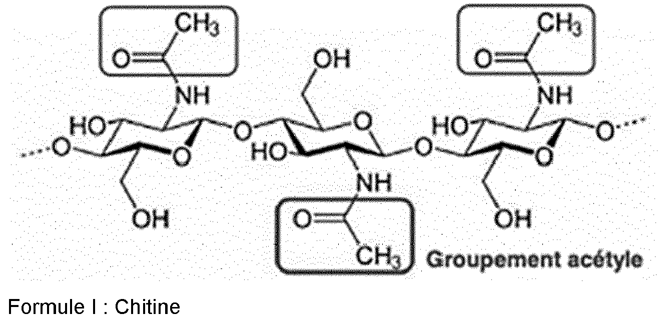

Plus particulièrement, la chitine est un polymère N-acétylé de P-1 ,4-(D)-glucosamine fortement insoluble.

Comme la cellulose, la chitine est une fibre, mais elle a en plus des caractéristiques chimiques et biologiques exceptionnelles utilisables dans de nombreuses applications industrielles et médicales.

Le chitosane est obtenu à partir de la chitine en enlevant suffisamment de groupes acétyle (CH3-CO) pour permettre à la molécule d'être soluble dans la plupart des acides dilués. Le chitosane est représenté par la structure générale selon la formule II.

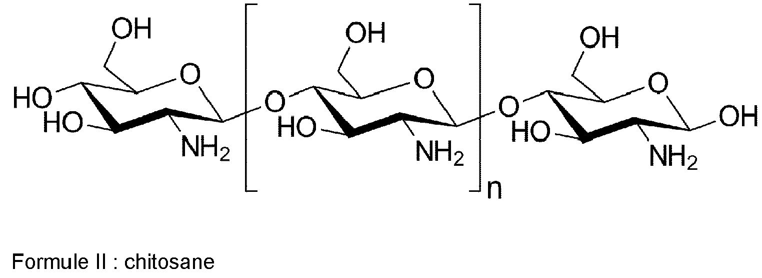

Actuellement, la production de chitine et de chitosane utilisables industriellement se fait à partir de déchets de carapaces de crustacés, tels que des crevettes et/ou des crabes, ou d'endosquelette des céphalopodes (calmars...), mais également à partir des champignons qui possèdent pour la plupart de la chitine dans leurs parois.

Les applications du chitosane pour l'agriculture sont étudiées depuis la fin du XXe siècle. Les effets d'éliciteur du chitosane ont notamment fait l'objet d'études par la NASA dans les années 90. Depuis 2008, le produit est considéré sécuritaire pour l'homme et l'environnement par l'EPA (Agence de Protection de l'Environnement des Etats-Unis). En 2016, la Commission Européenne a reconnu le chitosane comme étant une substance de base pour l'agriculture biologique. Malgré ces vertus écologiques et son énorme potentiel en agriculture, l'utilisation du chitosane en agriculture reste encore très limitée, voire négligeable.

Le chitosane est souvent pris comme une seule et même molécule, mais il s'avère que selon les propriétés physico-chimiques de la molécule, le chitosane aura des effets différents.

L'utilisation de chitooligosaccharides dans le domaine phytosanitaire est décrite dans le document CN 110720464.

Plusieurs documents décrivent l'utilisation de chitosane pour l'amélioration ou le traitement des plantes, comme le document RU2675485 qui concerne une composition agrochimique comprenant du chitosane polydispersé de poids moléculaire compris entre 10 000 et 30 000 Da ou encore le document US 20030119472 qui décrit une composition de bioagent comprenant du chitosane pour le soin des plantes.

Par ailleurs, on connait le document US 2005/0239657 qui décrit une composition contenant un mélange de chitosanes pour améliorer la résistance aux maladies et la croissance des plantes ou encore le document US 11,470,845 portant sur une composition antimicrobienne comprenant au moins deux polymères de chitosanes ayant au moins un poids moléculaire différent choisi en fonction du microorganisme à cibler ou encore le document KR 20060075105 décrivant une composition pour application foliaire et d'irrigation contenant un mélange de chitosanes.

L'objet de la présente invention est de proposer des produits pour le traitement des végétaux à base de chitosane qui aient une efficacité optimisée.

### RESUME

Pour atteindre cet objectif, selon un premier aspect on prévoit une composition pour le traitement des végétaux comprenant au moins deux chitosanes ou dérivés de chitosanes différents choisis parmi :
Un premier chitosane, dénommé Chitosane I, présentant un poids moléculaire moyen inférieur ou égal à 20 000 Daltons et un degré de désacétylation (DDA) supérieur ou égal à 70%,

Un deuxième chitosane, dénommé Chitosane Il présentant un poids moléculaire moyen supérieur à 20 000 Daltons et inférieur ou égal à 30 000 Daltons et un DDA supérieur ou égal à 85%,

Un troisième chitosane dénommé Chitosane III présentant un poids moléculaire moyen compris entre 50 000 et 100 000 Daltons et un DDA supérieur ou égal à 85%,

Un quatrième chitosane dénommé Chitosane IV présentant un poids moléculaire moyen compris entre 100 000 et 200 000 Daltons et un DDA supérieur ou égal à 80%,

Un cinquième chitosane dénommé Chitosane V présentant un poids moléculaire poids moléculaire moyen compris entre 200 000 et 350 000 Daltons et un DDA supérieur ou égal à 80%, Avantageusement, un sixième chitosane, dénommé Chitosane VI - Chlorhydrate de chitosane ayant une viscosité comprise entre 15 et 60 mPa.s., un DDA supérieur ou égal à 80% et avantageusement avec une teneur maximale en métaux lourds de 40 ppm.

Cette sélection de chitosanes présente un effet optimisé pour le traitement des végétaux. Préférentiellement, la composition comprend trois chitosanes ou dérivés différents choisis parmi ceux cités ci-dessus.

Suivant un deuxième aspect, l'invention concerne une composition pour le traitement des végétaux comprenant un complexe chitosane-métal, le chitosane étant choisi parmi le chitosane I et/ou le chitosane II parmi ceux cités ci-dessus.

La présence du complexe chitosane-métal dans la composition permet d'apporter un effet biofongicide, avantageusement le complexe présente un effet comme biofongicide de contact et biofongicide systémique.

Selon un troisième aspect, l'invention concerne un procédé de préparation d'une composition telle que décrite ci-dessus et notamment selon le premier aspect comprenant les étapes suivantes :
protonation des au moins deux chitosanes par dissolution dans de l'eau et un acide minéral, réticulation partielle des au moins deux chitosanes protonisés par un acide organique.

Selon un quatrième aspect, l'invention concerne une composition obtenue par le procédé selon le troisième aspect.

Selon un cinquième aspect l'invention concerne une utilisation de la composition selon le premier aspect et/ou le deuxième aspect pour le traitement ou la protection des végétaux et/ou comme éliciteur et/ou biostimulant et/ou biofongicide et/ou biocontrôle.

### BREVE DESCRIPTION DES FIGURES

Les buts, objets, ainsi que les caractéristiques et avantages de l'invention ressortiront mieux de la description détaillée d'un mode de réalisation de cette dernière qui est illustré par les dessins d'accompagnement suivants dans lesquels :
La figure 1 représente l'étape de protonation d'un chitosane par l'acide chlorhydrique.
La figure 2 illustre la réticulation partielle de quatre chitosanes différents : chitosane I, chitosane II, chitosane III et chitosane IV par l'acide citrique.
La figure 3 compare le taux de germination des deux groupes expérimentaux de blé de l'exemple 2.
La figure 4 illustre, aux jours 2 et 3 après la mise en incubateur, le taux de germination des 7 groupes expérimentaux de blé de l'exemple 2.
La figure 5 compare le taux de germination des deux groupes expérimentaux de colza de l'exemple 3.
La figure 6 compare le taux de germination de semences de colza traitées selon différentes conditions décrites à l'exemple 3.
La figure 7 compare le temps pour atteindre la résistance contre les ravageurs (stade 4 feuilles) de semences traitées selon différentes conditions décrites à l'exemple 3.
La figure 8 illustre le rendement en tonne par hectare d'une parcelle dont une partie est traitée selon l'exemple 5 et une partie est non traitée.
La figure 9 illustre le taux d'infestation des semences de maïs d'un groupe de semences traitées et d'un groupe témoin non traité selon l'exemple 8.
La figure 10 illustre le pourcentage de feuilles atteintes par la maladie au jour 0 et au jour 15 après traitement selon l'exemple 10.
La figure 11 illustre la longueur des plantules de l'exemple 11.
La figure 12 illustre la longueur des radicules de l'exemple 11.
La figure 13 illustre la masse sèche des plantules de l'exemple 11.
La figure 14 illustre la masse sèche des radicules de l'exemple 11.
La figure 15 illustre la longueur des plantules de l'exemple 12.
La figure 16 illustre la longueur des radicules de l'exemple 12.
La figure 17 illustre la masse sèche des plantes de l'exemple 12.
La figure 18 illustre la longueur des plantules de l'exemple 13.
La figure 19 illustre la longueur des radicules de l'exemple 13.
La figure 20 illustre la masse sèche des plantes de l'exemple 13.
La figure 21 illustre le nombre de pieds de plantules par m² pour l'exemple 13.
La figure 22 illustre le rendement en plein champ pour l'exemple 13.

Les dessins sont donnés à titre d'exemples et ne sont pas limitatifs de l'invention.

### DESCRIPTION DÉTAILLÉE

Avant d'entamer une revue détaillée de modes de réalisation de l'invention, sont énoncées ci-après des caractéristiques optionnelles qui peuvent éventuellement être utilisées en association ou alternativement :
À titre d'exemple, le poids total des chitosanes étant compris entre 0,1% et 10% en poids du poids total de la composition, préférentiellement entre 0,1 et 6%, par exemple de l'ordre de 5% par exemple de 2 à 5%.

À titre d'exemple, la composition comprend un premier solvant choisi parmi un acide minéral, plus préférentiellement l'acide phosphorique et/ou l'acide phosphoreux et/ou l'acide chlorhydrique ou un mélange de ceux-ci.

À titre d'exemple, la composition comprend un deuxième solvant choisi parmi un acide organique, plus préférentiellement l'acide formique et/ou l'acide citrique et/ou l'acide lactique et/ou l'acide acétique et/ou l'acide tartrique ou un mélange de ceux-ci.

À titre d'exemple, la composition est sous une forme d'hydrogel, les au moins deux chitosanes sont réticulés par des liaisons hydrogène.

À titre d'exemple, la composition comprend un complexe chitosane-métal, le chitosane étant choisi parmi le chitosane I, le chitosane II.

À titre d'exemple, le métal est choisi parmi les métaux de transition.

À titre d'exemple, le métal est choisi parmi le cuivre, l'argent, le zinc, le fer, le manganèse ou un mélange de ceux-ci.

À titre d'exemple, la quantité de métal est inférieure à 10% en poids du poids total la composition. À titre d'exemple, la composition comprend au moins un chitosane non complexé et au moins un chitosane complexé à un métal.

À titre d'exemple, la protonation du procédé se fait sous chauffage, préférentiellement à une température comprise entre 35 et 40°C.

À titre d'exemple, la réticulation du procédé se fait sous chauffage, préférentiellement à une température comprise entre 40 et 50°C.

À titre d'exemple, le procédé comprend une étape de complexation d'au moins un chitosane avec au moins un métal.

Dans ce contexte, l'expression «composition biostimulant» est utilisée pour désigner une composition comprenant au moins une substance pouvant être qualifiée comme «biostimulant» ou «biostimulant des végétaux» au sens du Règlement (UE) 2019/1009, c'est-à-dire comme désignant une substance qui stimule les processus de nutrition des végétaux indépendamment des éléments nutritifs qu'elle contient, dans le seul but d'améliorer l'efficacité d'utilisation des éléments nutritifs, la tolérance au stress abiotique, les caractéristiques qualitatives et/ou la disponibilité des éléments nutritifs confinés dans le sol ou la rhizosphère. On notera toutefois que des réalisations concrètes de la composition selon l'invention pourront être mises sur le marché sous d'autres appellations, comme, par exemple, «engrais», «engrais comprenant des biostimulants», «matière fertilisante», «combinaison de fertilisants», etc. Le choix de l'appellation dépendra, notamment, de la législation et des normes à respecter dans le pays de la mise sur le marché ainsi que de la composition spécifique du produit.

Une matière fertilisante est destinée à assurer ou à améliorer la nutrition des végétaux ainsi que les propriétés physiques, chimiques et biologiques des sols. Parmi les matières fertilisantes se trouvent les engrais, les amendements, leurs mélanges.

Les engrais sont des produits qui apportent aux végétaux des éléments nutritifs nécessaires à leur croissance. Ils peuvent être de type organique ou minéral. Il est généralement considéré que les éléments nutritifs peuvent être divisés en éléments de base, en éléments secondaires et en oligo-éléments. Les éléments de base -également appelés macronutriments- sont l'azote (N), le phosphore (P) et le potassium (K). Les éléments secondaires sont notamment le calcium (Ca), le soufre (S) et le magnésium (Mg). Les oligo-éléments sont notamment le fer (Fe), le manganèse (Mn), le molybdène (Mo), le cuivre (Cu), le bore (B), le zinc (Zn), le chlore (CI), le sodium (Na), le cobalt (Co), le vanadium (V) et le silicium (Si).

Les amendements sont des produits qui permettent à titre principal d'améliorer la qualité des sols, notamment du point de vue de la structure et de l'acidité. Ils contiennent souvent en outre des quantités non négligeables d'éléments nutritifs.

Parmi les effets bénéfiques des biostimulants sur le végétal peuvent être cités : la résistance aux stress abiotiques, l'amélioration de la croissance et du développement du végétal ou encore une meilleure absorption des nutriments par le végétal. Contrairement aux engrais, leur contenu en nutriments n'est généralement pas à l'origine des effets bénéfiques observés.

On entend par éliciteur une substance capable, dans certaines conditions, de stimuler des mécanismes de défense naturelle. Ces défenses naturelles sont dirigées par exemple soit contre des bioagresseurs (maladies, ravageurs), soit contre des stress abiotiques, tels ceux provoqués par le gel.

Le grade pharmaceutique est défini comme un ensemble de paramètres définissant la pureté d'un composé. Ce grade est défini dans la pharmacopée européenne en vigueur en Europe à la date de la présente demande.

Le grade alimentaire et le grade industriel sont définis notamment selon une teneur maximale en métaux lourds de 40 ppm.

On entend par un paramètre «sensiblement égal/supérieur/inférieur à» ou «de l'ordre de» une valeur donnée, que ce paramètre est égal/supérieur/inférieur à la valeur donnée, à plus ou moins 10 % près, voire à plus ou moins 5 % près, de cette valeur.

La composition selon l'invention comprend au moins deux chitosanes ou dérivés de chitosanes différents, préférentiellement trois chitosanes ou dérivés de chitosanes différents. Préférentiellement, les deux chitosanes sont choisis parmi les chitosanes ou les dérivés de chitosanes différents suivants :
- un premier chitosane, dénommé Chitosane I présentant un poids moléculaire moyen inférieur ou égal à 20 000 Daltons, c'est-à-dire 20 kg / mol, étant défini comme un poids moléculaire ultra bas, un degré de désacétylation (DDA) supérieur ou égal à 70%, selon une possibilité 85% et préférentiellement ayant une viscosité inférieure ou égale à 5 mPa.s. et préférentiellement avec une teneur maximale en métaux lourds de 40 ppm, selon une possibilité avec un grade pharmaceutique conforme à la Pharmacopée européenne en vigueur à la date de la présente demande de brevet,
- un deuxième chitosane, dénommé Chitosane Il présentant un poids moléculaire moyen supérieur à 20 000 Daltons et inférieur ou égal à 30 000 Daltons, c'est-à-dire 30 kg /mol étant défini comme un poids moléculaire très bas, un DDA supérieur ou égal à 85%, selon une possibilité 90% et préférentiellement ayant une viscosité comprise entre 6 et 10 mPa.s et préférentiellement avec un grade alimentaire, plus spécifiquement une teneur maximale en métaux lourds de 40 ppm et selon une possibilité un grade pharmaceutique conforme à la Pharmacopée européenne,
- un troisième chitosane, dénommé Chitosane III présentant un poids moléculaire moyen compris entre 50 000 et 100 000 Daltons, c'est-à-dire entre 50 et 100 kg / mol) étant défini comme un poids moléculaire bas, un DDA supérieur ou égal à 85% et préférentiellement ayant une viscosité comprise entre 15 et 22 mPa.s. et préférentiellement un grade alimentaire, plus spécifiquement une teneur maximale en métaux lourds de 40 ppm,

- un quatrième chitosane, dénommé Chitosane IV présentant un poids moléculaire moyen compris entre 100 000 et 200 000 Daltons, c'est-à-dire 100 à 200 kg /mol étant défini comme un poids moléculaire moyennement bas, un DDA supérieur ou égal à 80% et préférentiellement ayant une viscosité comprise entre 30 et 45 mPa.s., et préférentiellement un grade alimentaire, plus spécifiquement une teneur maximale en métaux lourds de 40 ppm,
- un cinquième chitosane, dénommé Chitosane V présentant un poids moléculaire poids moléculaire moyen compris entre 200 000 et 350 000 Daltons c'est-à-dire 200 à 350 kg /mol, un DDA supérieur ou égal à 80% et préférentiellement ayant une viscosité comprise entre 65 et 150 mPa.s., et préférentiellement un grade alimentaire, plus spécifiquement une teneur maximale en métaux lourds de 40 ppm,
- avantageusement un sixième chitosane, dénommé Chitosane VI - Chlorhydrate de chitosane ayant une viscosité comprise entre 15 et 60 mPa.s., un DDA supérieur ou égal à 80% et avantageusement avec une teneur maximale en métaux lourds de 40 ppm.

Les dérivés de chitosane sont préférentiellement le chlorhydrate de chitosane, phosphonate de chitosane, ou les chitosanes oligosaccharides.

Les chitosanes utilisés pour l'invention sont avantageusement d'origine crustacés (crevettes) avantageusement issus d'une pêche durable, insectes, tel que par exemple non exhaustifs : les larves de Hermetia illucens, la mouche soldat noire ou Tenebrio molitor, le ver de farine ou fongique, et de préférence issue du mycélium d'un champignon du type Ascomycète, et en particulier Aspergillus niger, et/ou d'un champignon Basidiomycète, et en particulier Lentinula edodes (shiitake) et/ou Agaricus bisporus (champignon de Paris).

Les chitosanes sont avantageusement d'une qualité microbiologique compatible avec son utilisation comme biostimulant.

La sélection de chitosanes de grade pharmaceutique participe à une conservation optimisée de la composition.

Les chitosanes sont souvent caractérisés par deux facteurs principaux : viscosité ou masse moléculaire moyenne et son degré de désacétylation ou son degré d'acétylation.

Le degré de désacétylation, ou DDA, est exprimé en nombre de moles d'unités D- glucosamine par rapport au nombre de moles d'unités totales N-acétyl-D-glucosamine et D-glucosamine présent.

Le degré d'acétylation DA est le nombre d'unités N-acétyle-D- glucosamine par rapport au nombre de moles d'unités totales N-acétyl-D-glucosamine et D-glucosamine présent.

L'un étant l'inverse de l'autre c'est-à-dire qu'un chitosane ayant un DDA de 85 %, possède 15 % de groupements acétyles et 85 % de groupements amines sur ses chaînes.

Le degré d'acétylation DA est par exemple déterminé par titrage potentiométrie. Le chitosane est dissout dans une solution d'acide chlorhydrique. L'excès d'acide chlorhydrique n'ayant pas réagi avec les fonctions aminées du chitosane est dosé par une solution titrée d'hydroxyde de sodium. On en déduit ainsi le nombre de moles d'unité D-glucosamine présente dans le chitosane c'est-à-dire le degré de désacétylation DDA et donc par soustraction le degré d'acétylation DA.

Le chitosane présente avantageusement un degré d'acétylation contrôlé. Par les termes «chitosane ayant un degré d'acétylation contrôlé» on entend un produit dont le degré d'acétylation, c'est-à-dire la proportion des unités N-acétyle-glucosamine, peut être ajustée de manière contrôlée.

Avantageusement, le chitosane présente un degré de désacétylation DDA supérieur ou égal à 70, préférentiellement supérieur strictement à 70%, plus préférentiellement supérieur ou égal à 80%.

La viscosité s'entend comme la viscosité dynamique. Cette viscosité dépend, entre autres, de la masse molaire. La viscosité est mesurée par viscosimétrie capillaire, avec un viscosimètre capillaire de type Ubbelohde, selon la méthode de la monographie de la Pharmacopée Européenne EP2.2.17.

La masse moléculaire moyenne du chitosane peut être estimée par la valeur de viscosité dynamique de la solution à 1% (m/m) de chitosane dans l'acide acétique à 1 % (v/v). La « solution à 1 % (m/m) de chitosane » s'entend d'une solution d'eau distillée comprenant 1 % en masse de chitosane par rapport à la masse totale de la solution de chitosane dans l'eau distillée. À cette solution à 1 % (m/m) de chitosane est ajouté de l'acide acétique pour obtenir une solution à 1% (m/m) de chitosane et 1 % (v/v) d'acide acétique. On peut aussi ajouter la poudre de chitosane dans une solution d'acide acétique pour arriver à 1 %. L'acide acétique à 1 % (v/v) s'entend d'une concentration de 1% en volume d'acide acétique par rapport au volume de la solution d'eau distillée finale.

Selon une variante spécifique, l'invention met en oeuvre au moins deux chitosanes différents présentant un degré de désacétylation supérieur ou égal à 70%, selon une possibilité préférée, de l'ordre de 80%, et une viscosité comprise entre 5 et 150mPa.s., préférentiellement inférieure ou égale à 145mPa.s.

Selon un mode de réalisation préféré, la composition comprend un pourcentage en poids de chitosanes par rapport au poids de la composition finale compris entre 0,1 et 10% m/m. Préférentiellement, préférentiellement entre 0,1 et 6%, par exemple de l'ordre de 5%, par exemple de l'ordre de 2%.

La composition comprend avantageusement de l'eau. La quantité d'eau dans la composition est configurée pour compléter la quantité à 100% (m/m). La composition est avantageusement une solution aqueuse de chitosane.

La composition comprend avantageusement un premier solvant préférentiellement un acide minéral, plus préférentiellement choisi parmi l'acide phosphoreux et/ou l'acide phosphorique et/ou l'acide chlorhydrique ou un mélange de ceux-ci.

La composition comprend avantageusement comme premier solvant un acide minéral en quantité comprise entre 0,1 g/l et 150 g/l selon l'acide choisi. À titre d'exemple, entre 0,7% et 2% en poids du poids total de la composition pour l'acide chlorhydrique, entre 10% et 15 % en poids du poids total de la composition pour l'acide phosphoreux et entre 3% et 5% en poids du poids total de la composition pour l'acide phosphorique.

Préférentiellement, le premier solvant est choisi pour assurer la protonation des chitosanes.

La composition comprend avantageusement un deuxième solvant choisi parmi un acide organique, préférentiellement un acide carboxylique à chaîne carbonée courte, préférentiellement inférieure ou égale à 6.

Avantageusement, l'acide organique est choisi parmi l'acide acétique et/ou l'acide tartrique et/ou l'acide formique et/ou l'acide citrique et/ou l'acide lactique ou un mélange de ceux-ci.

La composition comprend avantageusement comme deuxième solvant un acide organique en quantité comprise entre 1g/l et 100 g/l selon l'acide choisi. À titre d'exemple, l'acide organique est en quantité préférée comprise entre 5 et 15% en poids du poids total de la composition. Préférentiellement, le deuxième solvant est choisi pour assurer la réticulation des chitosanes. La composition est avantageusement sous forme d'hydrogel. Par hydrogel on entend un gel comprenant un agent gonflant qui est l'eau.

Selon un mode de réalisation de l'invention, l'hydrogel est un réseau des au moins deux chitosanes réticulés.

Par la réticulation des chitosanes, on entend que des chaînes de chitosanes rendues hydrosolubles par la présence de groupements hydrophiles, notamment lors de la protonation du chitosane par un acide minéral du premier solvant se connectent entre elles grâce à l'acide carboxylique de l'acide organique du deuxième solvant et préférentiellement par un traitement thermique.

Selon un mode de réalisation préféré, la sélection de l'acide organique comprenant une chaîne carbonée de 6 atomes maximum et avantageusement dans le cas d'un traitement thermique, un maintien de la température inférieure ou égale à 50°C, préférentiellement 45°C, préférentiellement 40°C, permet de minimiser le nombre de liaisons chimiques et covalentes en favorisant la réticulation par des liaisons hydrogène.

Avantageusement, la réticulation partielle permet qu'une fois sur la plante, la réticulation commence à se défaire et les molécules de chitosanes sont relâchées une par une, et sont absorbées par la plante.

Les liaisons hydrogène sont plus faibles et permettent la libération rapide et stable de différents chitosanes dès l'application de la préparation. De plus, les chitosanes protonés par l'acide minéral (disposant d'une charge positive) peuvent s'attacher rapidement à la surface des végétaux (disposant d'une charge négative). Cela réduit le lessivage de chitosanes et augmente la durée de l'efficacité de traitement.

Selon une possibilité préférée, les au moins deux chitosanes sont partiellement réticulés. À titre d'exemple préféré, au moins 50% des chitosanes sont réticulés, préférentiellement inférieur stricte à 100%. Le pourcentage de chitosanes réticulés par une double liaison carbone - azote est inférieur ou égal à 10%. Les chitosanes de la composition sont réticulés par le biais des unités de l'acide carboxylique du deuxième solvant. Par réticulation, on entend la formation d'un ou de plusieurs liaisons chimiques ou physiques (ponts) entre les chaînes de chitosanes. Dans le cas de ce procédé, la réticulation partielle désigne une réticulation dans laquelle l'agent réticulant (l'acide carboxylique de moins de 6 carbones) et le traitement thermique modéré permet de minimiser le nombre de ponts stables (les liaisons chimiques et covalentes) en favorisant la réticulation par les liaisons hydrogène. Avantageusement, en utilisant les acides cités, et notamment l'acide citrique ou acétique, la formation de liaison dit imide est réduite. Avantageusement, la réticulation par l'acide citrique ou acétique est utilisée pour éviter de créer un niveau élevé de réticulations stables par le biais de la liaison imide. Dans l'invention, la réticulation est donc partielle.

L'utilisation de chitosanes partiellement réticulés par les unités de l'acide organique permet notamment de réduire le lessivage de la composition. Toutefois, la réticulation étant avantageusement uniquement partielle, elle limite la diminution des amines libres permettant que les unités amines protonées aident le chitosane à s'accrocher aux plantes ou les microorganismes maintenant une assimilation du chitosane par la plante.

Préférentiellement, la réticulation des au moins deux chitosanes de la composition selon l'invention est réalisée par le deuxième solvant, avantageusement choisi parmi des acides carboxyliques à chaîne carbonée courte, préférentiellement inférieure ou égale à 6.

Selon une variante, l'acide carboxylique est mélangé à des acides aminés ou un hydrolysat protéique contenant des peptides et des acides aminés libres. La quantité ajoutée est préférentiellement de l'ordre de 1 à 10%, plus préférentiellement 5% en poids du poids total de la composition finale. Cette option permet de stimuler la résilience de plante en cas de l'infection. Selon un mode de réalisation, la composition est stable pour une période de 18 mois préférentiellement 24 mois. La stabilité de la composition est préférentiellement vérifiée par l'absence de moisissure. Préférentiellement, la sélection de chitosanes de grade pharmaceutique participe à la stabilité de la composition.

Selon un mode de réalisation, la composition présente un pH inférieur ou égal à 4,5, préférentiellement inférieur ou égal à 4, plus préférentiellement inférieur ou égal à 3,5.

Selon un aspect, l'invention concerne l'utilisation de la composition décrite ci-dessus pour une application sur les semences notamment par enrobage des semences et/ou sur les feuilles notamment par pulvérisation et/ou sur le sol par pulvérisation ou arrosage.

À titre d'exemple, la composition est configurée pour être appliquée à une dose de 1 litre de composition pour 100 kg de semences.

Selon un aspect, l'invention concerne l'utilisation de la composition décrite ci-dessus comme biostimulant, et/ou comme éliciteur et/ou comme phytostimulant et/ou biofongicide.

Selon un aspect, la présente invention concerne un procédé de fabrication d'une composition selon l'invention comprenant une étape de protonation des chitosanes sélectionnés et une étape de réticulation partielle.

Avantageusement, l'étape de protonation comprend la formation d'un mélange de chitosanes, d'eau et d'acide minéral.

Préférentiellement, au moins un chitosane, ou plusieurs chitosanes successivement ou mélangés, est ajouté dans de l'eau avantageusement chauffée. Le premier solvant est ajouté au mélange.

Selon un mode de réalisation préféré, l'étape de protonation comprend le chauffage de l'eau, préférentiellement à une température comprise entre 35 et 40°C. Puis, l'étape de protonation comprend l'ajout d'au moins un chitosane dans l'eau chauffée, avantageusement sous agitation. Puis, le premier solvant est ajouté, préférentiellement sous agitation. Le premier solvant est un acide minéral, ou un mélange d'un ou plusieurs acides minéraux tel que décrit ci-dessus. Selon une possibilité, chaque chitosane est ajouté séparément dans un volume d'eau distinct puis sont réunis. Selon une autre possibilité, les chitosanes sont ajoutés successivement les uns après les autres dans l'eau chauffée. Les deux possibilités peuvent être combinées ou alternatives.

La solution obtenue est dénommée solution I. L'agitation est maintenue préférentiellement entre 5 et 10 min. Selon une possibilité, la solution I est dégazée. Le dégazage de la solution I se fait pendant préférentiellement 20 à 30 min. La solution I obtenue est avantageusement claire.

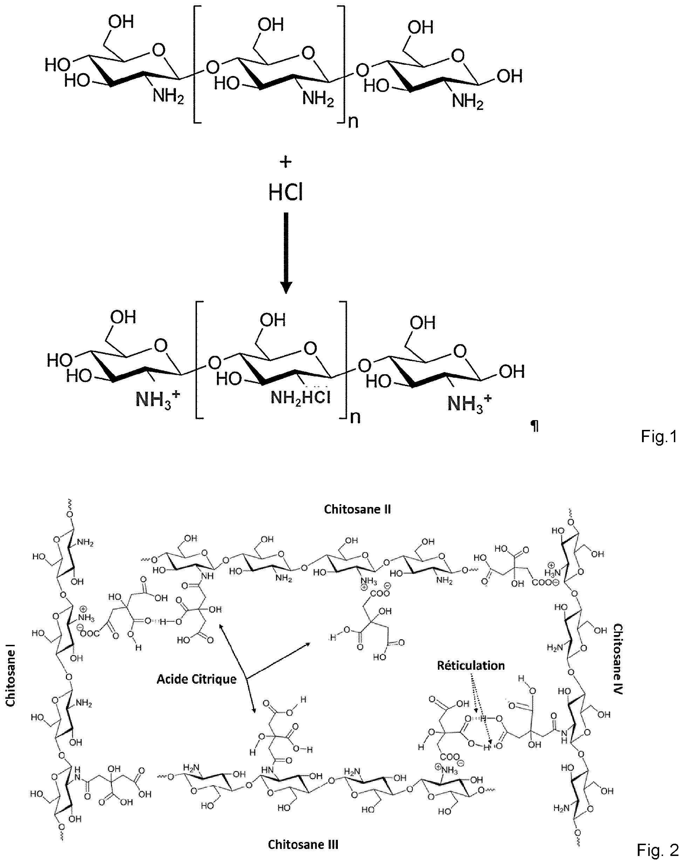

La figure 1 illustre la protonation de chitosane par l'acide chlorhydrique.

À l'issue de l'étape de protonation, le procédé comprend l'étape de réticulation avantageusement partielle. L'étape de réticulation comprend l'ajout du deuxième solvant, préférentiellement sous agitation et préférentiellement sous chauffage, dans le mélange obtenu à l'issue de l'étape de protonation, la solution I. Le deuxième solvant est avantageusement un acide organique ou un mélange d'acides organiques décrit ci-dessus.

La figure 2 illustre la réticulation partielle des chitosanes selon l'invention : quatre chitosanes différents sont réticulés : chitosane I, chitosane II, chitosane III et chitosane IV. La réticulation est partielle par des liaisons hydrogène formées entre les acides carboxyliques de l'acide organique, ici l'acide citrique, fixé sur les chitosanes suites à leurs protonation par l'acide minéral.

Selon une possibilité, le procédé comprend une étape d'ajustement du pH à un pH cible préférentiellement inférieur à 4,5, préférentiellement inférieur à 3,5. Avantageusement, le pH est ajusté par l'ajout d'un acide minéral pouvant être ou non le premier solvant décrit ci-dessus. Selon un aspect séparable ou combinable avec le précédent aspect, l'invention concerne une composition dans laquelle les au moins deux chitosanes de la composition sont plus particulièrement choisis parmi :
- Un premier chitosane, dénommé Chitosane I présentant un poids moléculaire moyen inférieur ou égal à 20 000 Daltons, c'est-à-dire 20 kg / mol, étant défini comme un poids moléculaire ultra bas, un degré de désacétylation (DDA) supérieur ou égal à 70%, selon une possibilité 85% et préférentiellement ayant une viscosité inférieure ou égale à 5 mPa.s. et et avec une teneur maximale en métaux lourds de 40 ppm, selon une possibilité avec un grade pharmaceutique conforme à la Pharmacopée européenne en vigueur à la date de la présente demande de brevet.
- Un deuxième chitosane, dénommé Chitosane Il présentant un poids moléculaire moyen supérieur à 20 000 Daltons et inférieur ou égal à 30 000 Daltons, c'est-à-dire 30 kg /mol étant défini comme un poids moléculaire très bas, un DDA supérieur ou égal à 85%, selon une possibilité 90% et préférentiellement ayant une viscosité comprise entre 6 et 10 mPa.s et un grade alimentaire, plus spécifiquement une teneur maximale en métaux lourds de 40 ppm, et selon une possibilité un grade pharmaceutique conformant à la Pharmacopée européenne,
et dont au moins un chitosane est complexé à un métal.

Le métal étant préférentiellement choisi parmi les métaux de transition, plus spécifiquement les ions métalliques bivalents, plus spécifiquement de la colonne IB du tableau périodique. À titre préféré, le métal est choisi parmi le cuivre, l'argent, le zinc, le fer, le manganèse ou un mélange de ceux-ci.

Le chitosane joue le rôle de ligand d'un cation métallique pour former par chélation le complexe chitosane-métal.

Cette composition présente un effet pour le traitement des maladies fongiques de plantes, c'est-à-dire un effet biofongicide.

Cette composition présente également un rôle de biocontrôle pour la prévention des maladies fongiques de plantes et avantageusement de guérison.

Les fongicides chimiques (organiques) largement utilisés présentent des risques importants de toxicités pour l'homme et les autres êtres vivants. Des réglementations de plus en plus dures sont adoptées et la mise sur le marché de ce type de produit est de plus en plus difficile.

De plus, les produits chimiques qui sont utilisés provoquent le développement de résistance des pathogènes qui sont néfastes à long terme.

Aujourd'hui, on utilise les produits à base de phosphite (ou les phosphonates), soufre et le cuivre pour prévenir les maladies fongiques des plantes afin de réduire le recours aux fongicides chimiques. Malheureusement, les produits naturels n'ont pas un effet suffisant sur les maladies des plantes et notamment les maladies cryptogamiques.

Des études ont montré que le chitosane a des effets antifongiques. Il est également bien établi que le chitosane peut stimuler la défense naturelle des plantes contre les maladies infectieuses. L'effet antimicrobien du chitosane est toutefois défini comme instable et sensible. Des complexes métal - chitosane ont été développés pour optimiser les effets du chitosane. Toutefois, ces complexes ne sont pas efficaces lors des applications sur des végétaux.

Le déposant s'est aperçu que la sélection de chitosanes telle que décrite ci-dessus pour cet aspect notamment permet d'avoir un complexe chitosane-métal présentant une bonne solubilité sans risque de précipitation ou coagulation qui permet une application et une efficacité optimisées sur les végétaux. Le complexe chitosane-métal selon l'invention a un effet fongicide de contact, le complexe présentant lui-même un effet toxique sur les champignons pathogènes. Le complexe présente également l'avantage d'assurer la complexation du métal et donc de diminuer sa toxicité envers le végétal traité.

La formation de complexe chitosane sélectionné - métal permet une synergie de l'effet fongicide tout en limitant l'effet dormant sur la culture de chitosane a trop haute dose et l'effet potentiellement toxique pour l'environnement des métaux a trop forte dose également. Préférentiellement, la composition comprend une quantité de métal comprise entre 50 et 100 g par kilo de composition, préférentiellement la composition est configurée pour permettre de respecter une dose maximale de métal de 250g par hectare traité et plus particulièrement de cuivre et une dose maximale de chitosane de 800g par hectare traité.

La quantité de métal dans la composition est de préférence inférieure ou égale à 10% en poids du poids total de la composition finale.

De manière surprenante, la composition selon le deuxième aspect comprenant un complexe chitosane - métal possède un effet biostimulant et/ou éliciteur.

Dans la composition selon cet aspect, au moins un des au moins deux chitosanes de la composition forme un complexe chitosane-métal et avantageusement au moins un des au moins deux chitosanes de la composition ne forme pas de complexe chitosane-métal. Cette disposition permet avantageusement de combiner les effets du complexe chitosane-métal et du chitosane selon l'invention.

Selon cet aspect, l'invention concerne également un procédé de fabrication d'une composition selon cet aspect de l'invention. Le procédé de fabrication comprend au moins une étape de complexation comprenant le mélange d'une solution de chitosane et d'une solution de métal. Avantageusement, l'étape de complexation comprend préférentiellement une étape de préparation d'une solution de chitosane et avantageusement une étape de préparation d'une solution de métal et avantageusement une étape de mélange de la solution de chitosane et de la solution de métal.

Le mélange de la solution de chitosane et de la solution de métal est préférentiellement réalisé à une température comprise entre 60°C et 70°C et avantageusement sous agitation, préférentiellement pendant une durée minimale de 2h, préférentiellement pendant une durée de 2h à 4h.

L'étape de préparation d'une solution de chitosane comprend l'addition d'au moins un chitosane avantageusement choisi parmi la liste des chitosanes selon cet aspect, dans de l'eau, puis l'ajout d'un acide, préférentiellement faible. À titre d'exemple, l'acide est un acide minéral choisis plus spécifiquement parmi l'acide phosphorique et/ou l'acide phosphoreux et/ou l'acide chlorhydrique ou un mélange de ceux-ci. Préférentiellement, cette étape de préparation de la solution de chitosane se fait sous agitation. Préférentiellement, cette étape, ou au moins l'ajout de l'acide, se fait à une température comprise entre 50°C et 75°C, préférentiellement entre 60°C et 70°C préférentiellement 60°C.

Selon un mode de réalisation, la solution de chitosane comprend une quantité de chitosane comprise entre 1 et 15 %, préférentiellement 5% en poids du poids total de la solution de chitosane.

Selon un mode de réalisation, la solution de chitosane comprend une quantité d'acide comprise entre 5% et 20 %, préférentiellement entre 10 % et 15% en poids du poids total de la solution de chitosane. La solution de chitosane comprend de l'eau dans une quantité suffisante pour atteindre 100%.

L'étape de préparation d'une solution de métal comprend l'ajout d'un métal dans de l'eau. Préférentiellement, le métal est celui sélectionné comme décrit ci-dessus et il est dissout dans de l'eau, préférentiellement sous agitation. Préférentiellement, cette étape de préparation est réalisée à une température comprise entre 35°C et 50°C, préférentiellement 40°C. Préférentiellement, l'eau est chauffée à ladite température cible. Selon une possibilité, un acide carboxylique est ajouté à la solution de métal pour faciliter la dissolution du métal. L'acide carboxylique est préférentiellement choisi parmi l'acide acétique, l'acide lactique ou préférentiellement l'acide citrique.

La solution de chitosane et la solution de métal sont ensuite mélangées.

De manière optionnelle, après l'étape de complexation, le procédé comprend l'ajout d'un ou plusieurs acides aminés, ou extrait contentant de protéines et/ou de peptides et/ou les acides aminés libres. La quantité ajoutée est préférentiellement de l'ordre de 1 à 10%, plus préférentiellement 5% en poids du poids total de la composition finale. Cette option permet de stimuler la résilience de plante en cas de l'infection.

Selon un mode de réalisation préféré, le procédé comprend une étape de préparation d'une solution de chitosane non complexé avec un métal. Préférentiellement, cette étape de préparation comprend l'ajout d'au moins un chitosane dans de l'eau, préférentiellement avec l'ajout d'un acide choisi parmi l'acide phosphoreux, acide acétique, acide citrique, acide lactique ou un mélange de ceux-ci. Préférentiellement, l'acide est choisi parmi l'acide phosphoreux et l'acide citrique. Avantageusement, cette étape est réalisée à une température comprise entre 50°C et 70°C, préférentiellement à 60°C. Dans ce mode de réalisation, la solution de chitosane non complexé est ajoutée à la solution complexée obtenue à l'issue de l'étape de complexation. L'ajout de la solution non complexée à la solution complexée se fait préférentiellement par goutte à goutte et préférentiellement à une température comprise entre 50°C et 70°C, préférentiellement à 60°C.

### Exemples

### Exemple 1 : préparation d'une composition pour une application sur les semences

Étape de protonation :
   1. Chauffer 25 mL d'eau jusqu'à une température comprise entre 35 et 40 °C dans un récipient compatible ;
   2. Ajouter 0,5 gramme de chitosane IV et mélanger pendant 5 min ; Le chitosane IV est le Chitosan HD1P d'origine maritime, viscosité 45 cps, DDA 90% fourni par ChitosanLab France.
   3. Ajouter 0,4 mL d'acide chlorhydrique 15% et mélanger pendant 5 - 10 min ;
      Si le chitosane n'est pas totalement dissous, répéter l'étape 3 avec 0.1 mL de l'acide chlorhydrique;
   4. Laisser dégazer pendant 20 - 30 minutes. La solution est claire (solution I) ;
   5. Chauffer 50 mL d'eau jusqu'à une température comprise entre 35 et 40 °C. Ajouter 0,4 gramme de chitosane III et mélanger pendant 5 min ; Le Chitosane III est le Chitosan HD1P , vicosité 18.5 cps, DDA 90.5% fourni par chitosanLab France.
   6. Ajouter 0,1 gramme du chitosane Il au mélange obtenu à l'étape 5 et laisser mélanger pendant 5 minutes ; Le chitosane Il est le Chitosane very low molecular weight, code GP5480, viscosité 10 cps, DDA 95.3% fourni par Glentham UK.
   7. Ajouter 0,4 mL de l'acide chlorhydrique 15% et laisser dissoudre (solution II) ;
   8. Ajouter la solution I à la solution Il sous agitation ;
Étape de réticulation
   9. Ajouter 1,0 g d'acide acétique ou d'acide citrique (toutes les formes sont possibles) et agiter pendant 30 minutes à 45 °C
Étape d'ajustement du pH
   10. Ajuster le pH de la solution à un pH inférieur 3,5 ;
   11. Ajouter la quantité suffisante d'eau pour atteindre le volume final de 100 mL. La concentration du chitosane dans la solution finale est donc de 1% (p/v).

### Exemple 2 : Mode d'emploi et dose

100 µl de la composition obtenue à l'exemple 1 est mélangé à 10 grammes de semences. Le mélange est agité jusqu'à la dispersion homogène du liquide puis il est laissé à l'air pendant 24 heures.

Un premier groupe (Groupe I) de 25 grammes de semences de blé tendre biologique d'hiver, variété GWENN est traité par la méthode indiquée ci-dessus. C'est-à-dire que 25 grammes de semences sont traités avec 2,5µl de la composition de l'exemple 1.

Un deuxième groupe (Groupe II) dit groupe Témoin est traité par de l'eau distillée avec la même technique. 35 grains de chaque groupe sont semés dans une parcelle expérimentale en trois rangs parallèles et le taux de germination total est compté.

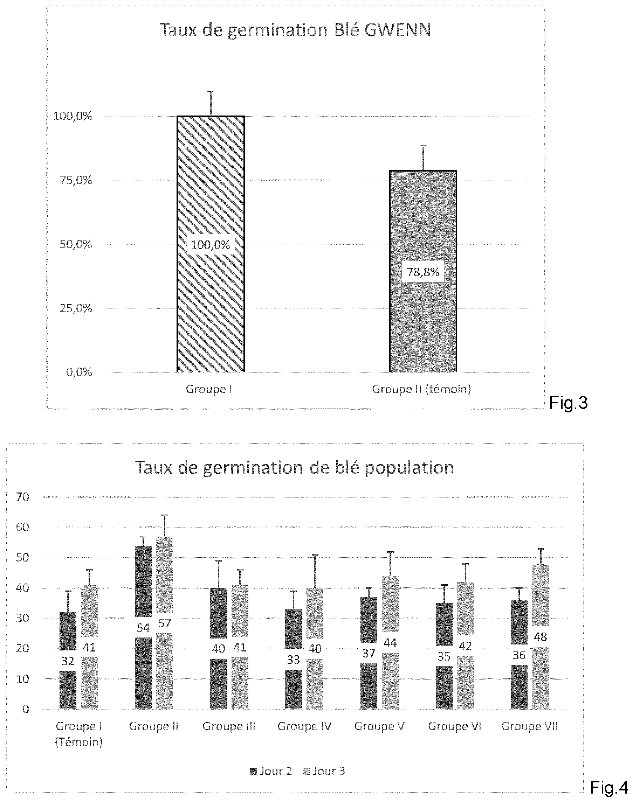

La figure 3 compare le taux de germination des deux groupes expérimentaux. Le traitement par la préparation décrite (Groupe I) augmente le taux de germination de blé de plus de 19% par rapport aux témoins (Groupe II).

Une deuxième variété de blé tendre d'hiver, semences populations biologiques, dites de blés fermiers, est traitée de la même manière :
- 100 µl de la composition obtenue à l'exemple 1 est mélangé à 10 grammes de semences. Le mélange est agité jusqu'à la dispersion homogène du liquide puis il est laissé à l'air pendant 24 heures. Les résultats sont illustrés à la figure 4.

La figure 4 illustre les résultats du taux de germination pour 7 groupes expérimentaux :

| | |
|---|---|
| Groupe I | Témoins |
| Groupe II | Composition complète |
| Groupe III | Sans acide minéral |
| Groupe IV | Sans acide organique (acide acétique) |
| Groupe V | Sans chitosane II |
| Groupe VI | Sans chitosane III |
| Groupe VII | Sans chitosane IV |

Les résultats sont illustrés à la figure 4 aux jours 2 et 3 après la mise en incubateur, dans un sopalin mouillé.

La différence entre le taux de germination des semences traitées groupe Il et des témoins groupe I est bien visible. De plus, les semences traitées disposent d'une vitesse de croissance plus rapide que les témoins non - traitées.

### Exemple 3 : Comparaison de l'effet biostimulant des chitosanes (IV, II, III) et des acides utilisés dans la préparation, séparément ou d'une manière incomplète.

Des semences de colza sont traitées selon l'exemple 2 en deux groupes : Groupe I traité avec la composition de l'exemple 1, Groupe Il témoin traité à l'eau distillée.

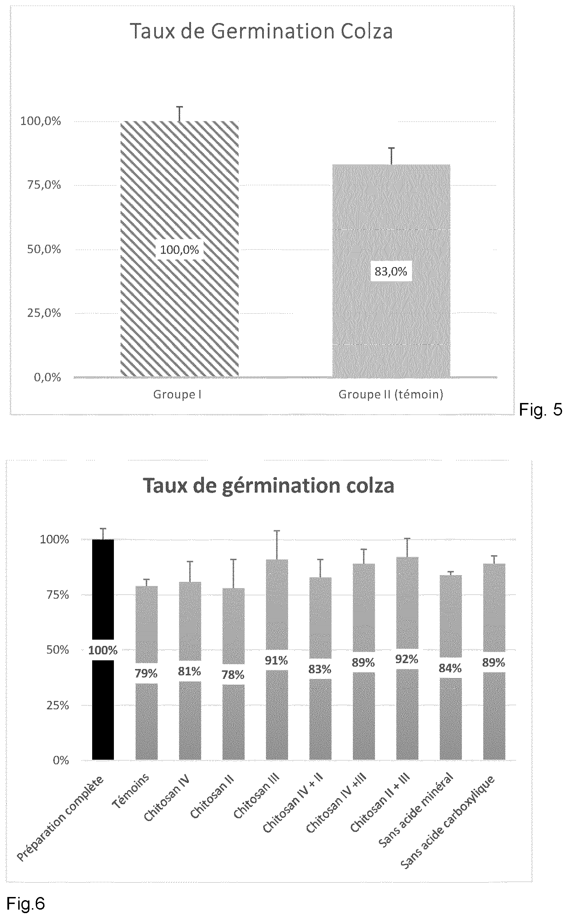

50 grains choisis au hasard dans chacun des deux groupes sont distribués dans des boites de pétri couvertes par papier à filtre humidifié. Les semences sont ensuite mises en incubateur (25°C) pour une période de 7 jours. La figure 5 présente le taux de germination des deux groupes.

On constate encore une fois que la composition (Groupe I) permet le meilleur taux de germination face au Groupe Il (Témoins).

Pour confirmer ces résultats, nous avons traité et semé les semences de la même variété avec les chitosanes IV, Il et III, avec et sans les acides.

Pour les groupes Préparation complète, chitosane IV, chitosane II, chitosane III, chitosanes IV + II, chitosanes IV + III, chitosanes Il + III, le procédé de fabrication est celui décrit à l'exemple 1. Pour le groupe sans acide minéral, le procédé de l'exemple 1 est réalisé sans réaliser l'ajout d'acide minéral lors de l'étape de protonation.

Pour le groupe sans acide organique, le procédé de l'exemple 1 est réalisé sans réaliser l'ajout d'acide organique lors de l'étape de réticulation.

Ensuite, 30 semences pour chaque groupe sont semées dans des rangs parallèles.

La figure 6 montre que la composition obtenue par le procédé de l'exemple 1 est le traitement le plus efficace. Le taux de germination est amélioré.

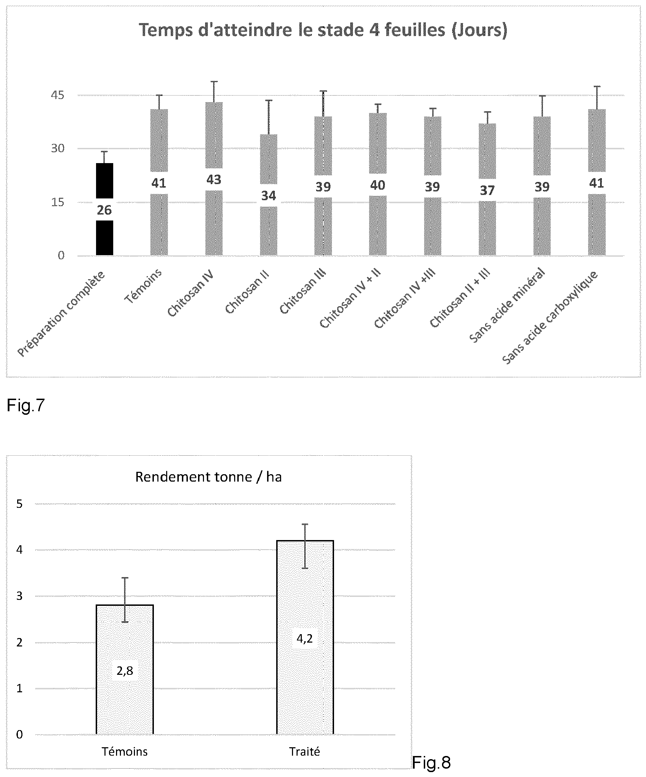

La vitesse de croissance est également comparée à la figure 7. Le stade 4 feuilles est un stade permettant d'atteindre une résistance face aux ravageurs plus ce stade est atteint rapidement mieux cela est pour la culture.

La figure 7 montre que la composition obtenue par le procédé décrit à l'exemple 1 est le traitement le plus efficace. Le temps pour atteindre la résistance contre les ravageurs (stade 4 feuilles) est réduit de 40%.

On constate que la composition selon l'invention augmente l'effet biostimulant du chitosane d'une manière surprenante.

### Exemple 4 : préparation d'une composition pour application foliaire

Étape de protonation :
   1. Ajouter 1 gramme de chitosane VI à 50 mL d'eau chauffée sous agitation ;
   2. Ajouter 0,4 mL d'acide chlorhydrique 15% et mélanger, obtention de la solution I ;
   3. Mélanger 0,25 gramme de chitosane III et 0,25 gramme de chitosane IV à 20 mL d'eau chauffée sous agitation ;
   4. Ajouter un 0,25 mL d'acide chlorhydrique 15% et agiter jusqu'à la dissolution complète obtention de la solution Il ;
   5. Mélanger 0,25 gramme de chitosane Il et 0,25 g de chitosane I à 20 mL d'eau sous agitation
   6. Ajouter 0,25 mL d'acide chlorhydrique 15% et agiter jusqu'à la dissolution complète, obtention de la solution III ;
   7. Laisser refroidir dans la température ambiante ;
   8. Ajouter les solutions Il et III d'une manière lente à la solution I sous agitation ;
   9. Chauffer le mélange jusqu'à 35 °C ;
Étape de réticulation :
   10. Ajouter 2,0 grammes d'acide acétique ou d'acide citrique ou d'acide formique au mélange obtenu à l'étape de protonation ;
   11. Dans une étape facultative, on peut ajouter 5 à 10 grammes d'extrait d'acides aminés ou les peptides d'intérêt agricole au mélange. Laisser agiter pendant 60 minutes à une température comprise entre 35 et 40 °C
Étape d'ajustement du pH
   - Ajuster le pH de la solution à 3,5 par addition d'un acide carboxylique
   - Ajouter la quantité suffisante d'eau pour atteindre un volume de 100 mL. La concentration de chitosane dans la préparation finale et de 2% (p/v)

### Exemple 5 : Mode et dose d'emploi

Diluer 1 mL de la préparation obtenue à l'exemple 4 dans 25 à 50 mL d'eau. Agiter vigoureusement et pulvériser sur les feuilles et les branches pour une couverture complète. Répéter le traitement dans 20 à 30 jours.

La composition obtenue est utilisée sur une prairie naturelle. La figure 8 illustre les résultats obtenus sur les deux parcelles, celle traitée et celle non traitée. Le rendement en tonne /hectare est très largement en faveur de la parcelle traitée.

### Exemple 6 : procédé de fabrication d'une composition comprenant un complexe chitosane - métal pour le traitement des semences

- Ajouter 2 g de chitosane I à 10 mL d'eau distillée sous agitation ;
- Ajouter 1 g d'acide citrique et laisser agiter pendant 30 min à 60°C (solution 1) ;
- Ajouter 1 g de chitosane (0,5 g de chitosane Il et 0,5 g de chitosane III) dans 10 mL d'eau et 3 grammes d'acide acétique et attendre jusqu'à la dissolution complète ;
- Chauffer jusqu'à 60°C (solution 2) ;
- Dissoudre 16 g de sulfate de cuivre (penta hydraté : CuSO4.5H2O) dans 42 mL d'eau distillée à 40°C ;
- Ajouter 10 g de sulfate de zinc (ZnSO4.H2O) (solution 3) ;
- Ajouter la solution 3 lentement et sous agitation à la solution 1 ;
- Chauffer jusqu'à 70°C et laisser agiter pendant au moins 4 heures ;
- Ajouter la solution 2, au goutte à goutte et laisser agiter à 60°C pendant 1 heure ;
- Ajouter 3 g de poudre d'extrait d'acide aminé et laisser agiter pour 1 heure (40°C) ;
- Laisser refroidir à température ambiante (> 20 °C)

### Exemple 7 : procédé de fabrication d'une composition comprenant un complexe chitosane - métal pour un usage foliaire

- Ajouter 2,0 grammes du chitosane I à 10 mL d'eau distillée et agiter jusqu'à la dissolution complète ;
- Ajouter 10 grammes de l'acide phosphoreux (H3PO3) ;
- Chauffer à 70°C et agiter pour 1 heure (solution 1) ;
- Ajouter 0,5 gramme de chitosane Il et 0,5 gramme du chitosane III à 10 mL d'eau. Ajouter 5 grammes de l'acide phosphoreux ou d'un acide carboxylique (acétique, citrique etc.) et laisser agiter pour 30 min (solution 2) ;
- Ajouter 20 grammes de sulfate de cuivre (penta hydraté : CuSO4.5H2O) à 35 mL d'eau distillée à 40°C. Ajouter 3 grammes d'acide carboxylique (acétique ou citrique...) et agiter pour 30 min (solution 3) ;
- Ajouter la solution 3 à la solution 1 lentement à 70°C et laisser agiter pendant 4 heures ;
- Ajouter 5 grammes de poudre d'extrait d'acides aminés (biostimulant agricole) et laisser dissoudre à 70°C ;
- Ajouter lentement (goutte par goutte) la solution 3 et laisser agiter pour 1 heure ;
- Laisser refroidir la préparation à la température ambiante.

### Exemple 8 : Prévention de maladies

Un premier groupe de semences de maïs est traité par la composition obtenue à l'exemple 6 : ajouter 175 µl de la composition obtenue à l'exemple 6 et 325 µl d'eau à 50 g de semences de maïs, agiter pendant 2 minutes et laisser sécher pendant 24 heures et semer.

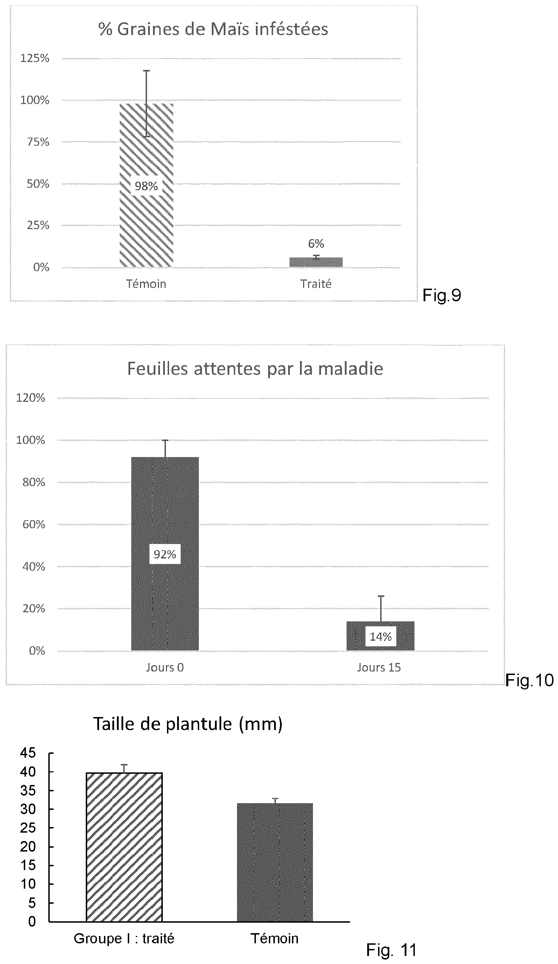

Un deuxième groupe de semences de maïs est traité à l'eau distillée : ajouter 500µl d'eau à 50 g de semences de maïs, agiter pendant 2 minutes et laisser sécher pendant 24 heures et semer. Les deux groupes de 50 grammes de semences de maïs sont ensuite inoculés par 2 grammes de terre infestée par Pythium sp puis placés dans un incubateur à 25°C. Les symptômes de la maladie (des taches noires) sont apparus sur le deuxième groupe témoin dès 48 heures après l'incubation à 25°C. Le taux d'infestation des semences de 1er groupe (6%) est de 92% moins que les semences témoins (98%) comme illustré à la figure 9.

### Exemple 9 : Le traitement de la fonte des semis

La fonte des semis est une maladie fongique transmise par le sol dont un des principaux symptômes est un pourrissement des semences ou des jeunes pousses en cours de germination. La fonte des semis de pois est une des maladies les plus importantes de cette culture. 50 grammes de semences de pois sont divisés en 2 groupes. Un premier groupe traité reçoit 88 µl de la composition selon l'exemple 6 et 163 µl d'eau distillée 24 heures avant semis. Le deuxième groupe témoins reçoit 251 µl d'eau distillée 24 heures avant semis. Les semences plantées sur 3 rangs de 20 semences. Plus de 73% des semences du groupe témoins sont morts à cause de la fonte des semis, mais le taux de montaison des semences du groupe traité par la composition de l'exemple 6 est de 100%.

Le premier groupe de semences traitées par la composition de l'invention est 100% immunisé contre cette maladie.

### Exemple 10 : traitement de la septoriose de céréales

Chaque année, plusieurs millions tonnes de céréales sont perdues à cause de cette maladie. Une parcelle de 15 hectares de petit épeautre qui présente des symptômes d'une septoriose avancée est traitée par la composition de l'exemple 7. 1 litre de la composition est dilué dans 100 litres d'eau puis pulvérisé par hectare.

Au jour de la pulvérisation, les feuilles sont fortement impactées par les taches de la septoriose. 50 pieds choisis au hasard sur une parcelle de 15 hectares sont comptés.

Au jour 15 après le traitement, 50 pieds ont été choisis par hasard sur la même parcelle et le nombre des nouvelles feuilles atteintes par les tâches est compté. La figure 10 montre que le développement de la maladie est bien arrêté et que les plantes sont complètement guéries.

### Exemple 11 : Utilisation de la préparation de l'exemple 1 en traitement de semences de féverole d'hiver.

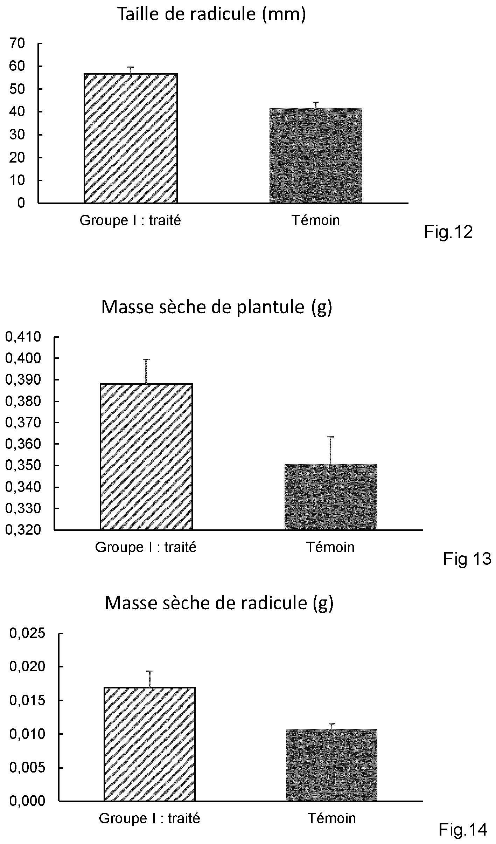

100 graines de la féverole d'hiver sélectionnées au hasard ont été réparties en deux groupes expérimentaux. Le premier groupe (50 graines) a été traité dans 10 µl de la préparation de l'exemple 1 par gramme de graine, tandis que le deuxième groupe (témoin) a été traité avec la même quantité d'eau distillée. Après agitation manuelle pendant 60 secondes, les graines ont été séchées à la température ambiante pendant 24 heures. Elles ont ensuite été enveloppées dans le papier humidifié et incubées à 25 ± 1 °C. Le sixième jour de l'incubation, les plantules ont été séparées et photographiées sur des arrière-plans noirs similaires. Le processus a été répété trois fois. Les mesures ont été effectuées sur les photos à l'aide d'lmageJ (ImageJ inclus avec Java 1.8.0_172 en 64 bits). Les mesures suivantes ont été réalisées : i) longueur des plantules (figure 11) et ii) longueur des radicules (figure 12).

Les graines germées ont ensuite été séchées à 70 °C pendant 72 heures et la masse sèche des plantules (figure 13) ainsi que la masse sèche des radicules (figure 14) ont été mesurées avec une précision de 0,001 gramme.

### Résultats :

Figure 11 : Le traitement a augmenté la taille des plantules jusqu'à 20 % (39,72 ± 2,31 mm dans le groupe traité contre 31,63 ± 1,29 dans le groupe témoin ; test t, p < 0,01, df = 43)
Figure 12 : les radicules étaient 26 % plus longs dans les semences traitées avec la préparation de l'exemple 1 (56,63 ± 2,92 mm contre 41,7 ± 2,55 mm dans le groupe témoin ; test t, p < 0,01, df = 70).
Figure 13 : Le traitement était associé à une augmentation de 20 % du poids sec des plantules (0,388 ± 0,011 g dans le groupe traité contre 0,351 ± 0,012 g dans le groupe témoin ; test t, p < 0,05, df = 77).
Figure 14 : Les radicules des plantes issues de graines traitées par la préparation de l'exemple 1 avaient 41 % de masse sèche en plus par rapport aux témoins (0,017 ± 0,002 g dans le groupe traité contre 0,011 ± 0,001 g dans le groupe témoin ; test t, p < 0,05, df = 42).

### Exemple 12 : Préparation d'une composition pour une application sur les semences de Maïs et essais.

Étape de protonation :
   1. Chauffer 25 mL d'eau jusqu'à une température comprise entre 35 et 40 °C dans un récipient compatible ;
   2. Ajouter 0,4 gramme de chitosane VI et mélanger pendant 5 min ; Le chitosane VI est le Chlorhydrate de chitosane d'origine maritime, viscosité 20 cps, DDA 88% fourni par Glentham life sciences UK.
      Si le chitosane n'est pas totalement dissous, ajouter 0.1 mL d'acide chlorhydrique ;
   3. Laisser dégazer pendant 20 - 30 minutes. La solution est claire (solution I) ;
   4. Chauffer 50 mL d'eau jusqu'à une température comprise entre 35 et 40 °C. Ajouter 0.1 gramme de chitosane I et mélanger pendant 5 min ; Le Chitosane I est le Chitosan GP1318, vicosité 5 cps, DDA 90.5% fourni par Glentham life sciences UK.
   5. Ajouter la solution I à la solution Il sous agitation ;
Étape de réticulation :
   6. Ajouter 1.0 g d'acide acétique ou d'acide citrique (toutes les formes sont possibles) et agiter pendant 60 minutes à 45 °C ;
   7. Laisser refroidir à la température ambiante et sous agitation
Étape d'ajustement du pH
   8. Ajuster le pH de la solution à un pH inférieur 3,5 ;
   9. Ajouter la quantité suffisante d'eau pour atteindre le volume final de 100 mL. La concentration du chitosane dans la solution finale est donc de 0.5% (p/v).

100 g de semences de maïs biologique variété HYPOLITO ont été divisés en deux groupes expérimentaux de 50 grammes. Le premier groupe (Groupe I : Traité) a été traité par 500 µl de la préparation obtenue ci-dessus. Le deuxième groupe a été traité de la même manière avec 500 µl d'eau distillée. Après 24 heures, 50 semences choisies au hasard ont été semées dans des pots contenant un terreau spécial semis disponible en supermarché (5 pots/ traitement contenant 10 semences). Les semences ont incubé pendant 7 jours à 24t 0.5 °C. 3 arrosages ont effectué avec 50 ml d'eau distillée / pot aux jours : 0, 2 et 4 après l'incubation. Le 7e jour après le début de la manipulation, les plantes sont placées dans un bassin d'eau (30 min) pour enlever la terre et après un lavage à l'eau de robinet, et séchage sur papier filtre (60 min), elles ont été photographiées et transportées dans un déshumidificateur à 50 °C pour 48 heures. Après le séchage, nous avons pesé chaque plante avec une précision de 0.001 g. Les mesures de radicules et plantules sont réalisées sur les photos, en utilisant le logiciel ImageJ.Résultats :

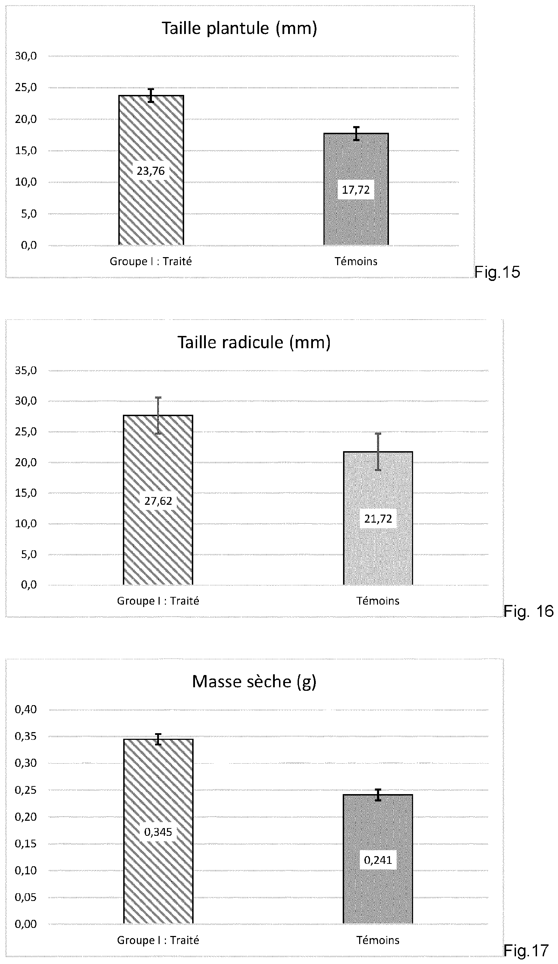

Figure 15 : Les plantules traitées étaient 25,4 % plus longues pour les semences traitées avec la préparation (23,76 ± 2,42 mm contre 17,72 ± 3,04 mm dans le groupe témoin ; test t, p < 0,05, df = 97).
Figure 16 : Les radicules étaient 21,3 % plus longues pour les semences traitées avec la préparation (27,62 ± 2,79 mm contre 21,72 ± 2,83 mm dans le groupe témoin ; test t, p < 0,05, df = 98).
Figure 17 : La masse sèche de la plante (incluant plantule et radicule) a également augmentée de plus 21,1% (0,345 ± 0,006 g dans le groupe traité contre 0,241 ± 0,008 g dans le groupe témoin ; test t, p < 0,01, df = 90).

### Exemple 13 : Préparation d'une composition pour une application sur les semences de Soja et essais

Étape de protonation :
   1. Chauffer 2 mL d'eau jusqu'à une température comprise entre 35 et 40 °C dans un récipient compatible ;
   2. Ajouter 0,5 gramme de chitosane V et mélanger pendant 5 min ; Le chitosane V est un chitosane d'origine maritime, viscosité 85 cps, DDA 86,3% fourni par Glentham life sciences UK.
   3. Ajouter 0,5 mL de l'acide chlorhydrique et laisser dissoudre pendant 5 minutes ;
      Si le chitosane n'est pas totalement dissous, répéter l'étape 3 avec 0.1 mL de l'acide chlorhydrique ;
   4. Laisser dégazer pendant 20 - 30 minutes. La solution est claire (solution I) ;
   5. Chauffer 50 mL d'eau jusqu'à une température comprise entre 35 et 40 °C. Ajouter 0,5 gramme de chitosane Il et mélanger pendant 5 min ; Le Chitosane Il est d'origine maritime avec une viscosité de 10 cps, DDA 96,5% fourni par Glentham life sciences UK.
   6. Ajouter la solution I à la solution Il sous agitation ;
Étape de réticulation :
   7. Ajouter 1,0 g d'acide citrique (toutes les formes sont possibles) et agiter pendant 60 minutes à 45 °C
   8. Laisser refroidir à la température ambiante et sous agitation
Étape d'ajustement du pH
   9. 1Ajuster le pH de la solution à un pH inférieur 3,5 ;
   10. Ajouter la quantité suffisante d'eau pour atteindre le volume final de 100 mL. La concentration du chitosane dans la solution finale est donc de 1,0 % (p/v).

100 g de semences de Soja biologique variété MENTOR ont été divisé en deux groupes expérimentaux de 50 grammes. Le premier groupe (Groupe I : Traité) a été traité par 300 µl de la préparation ci-dessus. Le deuxième groupe a été traité de la même manière avec 300 µl de l'eau distillée. Après 24 heures, 50 semences choisies au hasard ont été semées dans des pots contenant un terreau spécial semis disponible en supermarché (5 pots / traitement contenant 10 semences). Les semences ont incubé pendant 7 jours à 24t 0,5 °C. 3 arrosages ont été effectués avec 50 ml d'eau distillée / pot aux jours : 0, 2 et 4. Le 7e jour après le début de la manipulation, les plantes sont placées dans un bassin d'eau (30 min) pour enlever la terre et après un lavage à l'eau de robinet, et séchage sur papier filtre (60 min), elles sont photographiées et transportées dans un déshumidificateur à 50 °C pour 48 heures. Après le séchage, nous avons pesé chaque plante avec une précision de 0.001 g. Les mesures de radicules et plantules sont réalisées sur les photos, en utilisant le logiciel ImageJ.

Dans un deuxième essai, 20 kg du même lot de semences a été divisé en 2 groupes (Groupe I : Traité, et Groupe Il : Témoin). Le groupe I a été traité de la même manière avec 300 mL de la préparation et les témoins ont été traités par la même quantité d'eau distillée. Cinq jours après le traitement, les semences sont semées sur des parcelles voisines, d'une superficie de 100 m² ; en total 3 parcelles par traitement. La densité de semis est de 585 graines / m². Trois jours après le semis, nous avons mesuré le nombre de pieds / m². 4 mois et demi après les semis nous avons mesuré le rendement de la récolte.

### Résultats :

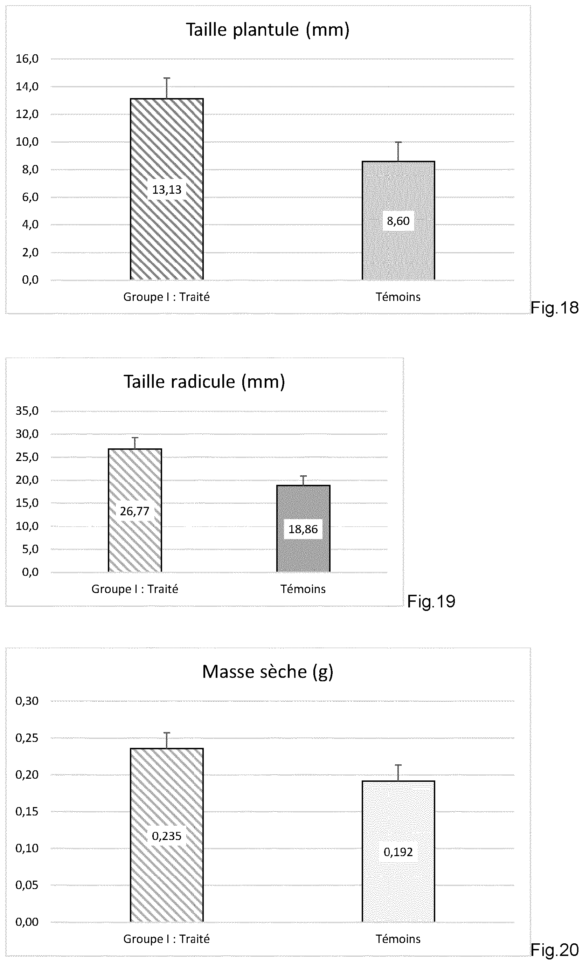

Figure 18 : les plantules sont 34,5% plus longues dans le groupe traité (13,13 ± 1,50 mm dans le groupe traité contre 8,60 ± 1,85 mm dans le groupe témoin ; test t, p < 0,05, df = 95).

Figure 19 : En moyen, la taille de radicule a augmenté de 29,5% (26,77 ± 2,47 mm dans le groupe traité contre 18,86 ± 2,05 mm dans le groupe témoin ; test t, p < 0,01, df = 88).

Figure 20 : La masse sèche de la plante (plantule et radicule) a également augmenté de plus 18,6 % (0,235 ± 0,038 g dans le groupe traité contre 0,192 ± 0,034g dans le groupe témoin ; test t, p < 0,05, df = 89).

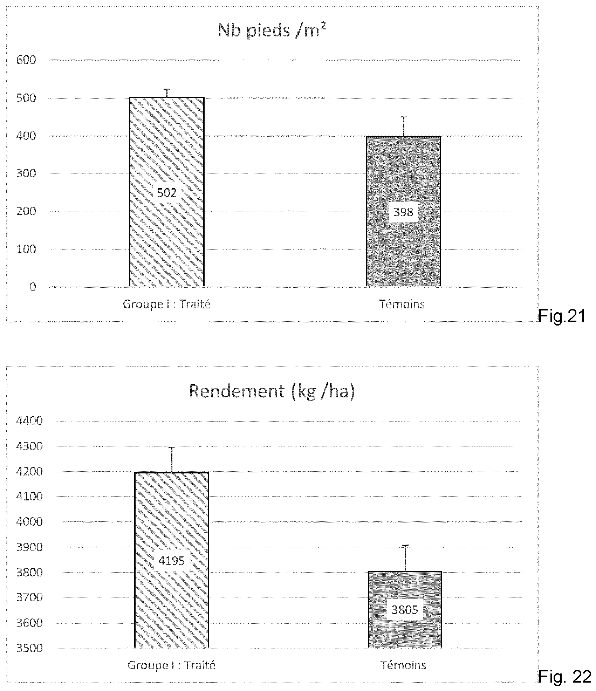

Figure 21 : Le traitement par la préparation a augmenté le taux de germination et la levée (nombre plantes / m²) de 20,7 % (502 ± 22 p/m² dans le groupe traité contre 0,192 ± 0,034g dans le groupe témoin ; test Kruskal-Wallice, p < 0,05, df = 6).

Figure 22 : Cette augmentation du nombre de plantes est associée à une hausse de rendement de 9,3 % (4195 ± 101 kg/ha dans le groupe traité contre 3805 ± 103 kg/ha dans le groupe témoin ; test Kruskal-Wallice , p < 0,05, df = 6).

L'invention n'est pas limitée aux modes de réalisations précédemment décrits et s'étend à tous les modes de réalisation couverts par l'invention.

## Revendications

1. Composition pour le traitement des végétaux comprenant au moins deux chitosanes différents ou dérivés de chitosanes différents
**Caractérisée en ce que** les au moins deux chitosanes ou dérivés de chitosanes sont choisis parmi :
• Un premier chitosane, dénommé Chitosane I : présentant un poids moléculaire moyen inférieur ou égal à 20 000 Daltons et un degré de désacétylation (DDA) supérieur ou égal à 70%,
• Un deuxième chitosane, dénommé Chitosane Il présentant un poids moléculaire moyen supérieur à 20 000 Daltons et inférieur ou égal à 30 000 Daltons et un DDA supérieur ou égal à 85%,
• Un troisième chitosane, dénommé Chitosane III présentant un poids moléculaire moyen compris entre 50 000 et 100 000 Daltons et un DDA supérieur ou égal à 85%,
• Un quatrième chitosane, dénommé Chitosane IV présentant un poids moléculaire moyen compris entre 100 000 et 200 000 Daltons et un DDA supérieur ou égal à 80%,
• Un cinquième chitosane, dénommé Chitosane V présentant un poids moléculaire poids moléculaire moyen compris entre 200 000 et 350 000 Daltons et un DDA supérieur ou égal à 80%,
• un sixième chitosane, dénommé Chitosane VI - Chlorhydrate de chitosane ayant une viscosité comprise entre 15 et 60 mPa.s., un DDA supérieur ou égal à 80% et avantageusement avec une teneur maximale en métaux lourds de 40 ppm.

2. Composition selon la revendication précédente dans lequel le poids total des chitosanes est compris entre 0,1 et 10% en poids du poids total de la composition, préférentiellement entre 0,1 et 6%, par exemple de l'ordre de 5%.

3. Composition selon l'une quelconque des revendications précédentes comprenant un premier solvant choisi parmi un acide minéral plus préférentiellement l'acide phosphorique et/ou l'acide phosphoreux et/ou l'acide chlorhydrique ou un mélange de ceux-ci.

4. Composition selon la revendication précédente comprenant un deuxième solvant choisi parmi un acide organique plus préférentiellement l'acide formique et/ou l'acide citrique et/ou l'acide lactique et/ou l'acide acétique et/ou l'acide tartrique ou un mélange de ceux-ci.

5. Composition selon l'une quelconque des revendications précédentes étant sous une forme d'hydrogel, les au moins deux chitosanes sont réticulés par des liaisons hydrogène.

6. Composition selon l'une quelconque des revendications précédentes comprenant un complexe chitosane-métal, le chitosane étant choisi parmi le chitosane I, le chitosane II.

7. Composition selon la revendication précédente dans laquelle le métal est choisi parmi les métaux de transition.

8. Composition selon l'une quelconques des deux revendications précédentes dans laquelle le métal est choisi parmi le cuivre, l'argent, le zinc, le fer, le manganèse ou un mélange de ceux-ci.

9. Composition selon l'une quelconque des trois revendications précédentes dans laquelle la quantité de métal est inférieure à 10% en poids du poids total la composition.

10. Composition selon l'une quelconque des quatre revendications précédentes comprenant au moins un chitosane non complexé et au moins un chitosane complexé à un métal.

11. Procédé de préparation d'une composition selon l'une quelconque des revendications précédentes comprenant les étapes suivantes :
a) protonation des au moins deux chitosanes par dissolution dans de l'eau et un acide minéral,
b) réticulation partielle des au moins deux chitosanes protonisés par un acide organique.

12. Procédé selon la revendication précédente dans lequel la protonation se fait sous chauffage préférentiellement à une température comprise entre 35 et 40°C.

13. Procédé selon l'une quelconque des deux revendications précédentes dans lequel la réticulation se fait sous chauffage préférentiellement à une température comprise entre 40 et 50°C.

14. Procédé selon l'une quelconque des trois revendications précédentes comprenant une étape de complexation d'au moins un chitosane avec au moins un métal.
